(19)

Europäisches
Patentamt
European
Patent Office
Office européen
des brevets

(11) **EP 2 579 412 A1**

(12) **EUROPEAN PATENT APPLICATION**

(43) Date of publication:
**10.04.2013 Bulletin 2013/15**

(51) Int Cl.:
***H02J 1/14*** (2006.01)          ***H02J 4/00*** (2006.01)
***H02M 3/156*** (2006.01)

(21) Application number: **12187548.8**

(22) Date of filing: **05.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.10.2011  IT TO20110893**

(71) Applicant: **Alenia Aermacchi S.p.A.
Venegono Superiore (Varese) (IT)**

(72) Inventors:
  • **De Maio, Biagio
    80065 Sant'Agnello (IT)**

  • **Catapano, Francesco
    80040 Pollena Trocchia (IT)**
  • **Galluzzo, Calogero
    21040 Venegono Superiore (IT)**
  • **Cuomo, Salvatore
    83013 Mercogliano (IT)**
  • **Esposito, Domenico
    80038 Pomigliano d'Arco (IT)**
  • **Nocerino, Salvatore
    80056 Ercolano (IT)**

(74) Representative: **Jorio, Paolo et al
Studio Torta S.p.A.
Via Viotti, 9
10121 Torino (IT)**

(54) **System and method for automated management of electric power supply for aeronautical applications**

(57)    An electric-power-supply system (1) for supply of a primary electrical load (5) and of a secondary electrical load (3), comprising: a power-supply line (10), configured to carry a main power-supply signal ($W_{TOT}$), the primary electrical load and the secondary electrical load being connected to the power-supply line; a controlled switch (2, 12) connected between the power-supply line and the secondary electrical load, having a control terminal (12c) receiving a control square-wave signal ($V_{CTR}$) configured to open and close the controlled switch and having a duty cycle; a current sensor (8), connected to the power-supply line, generating an intermediate current signal ($I_G$) correlated to the main power-supply signal; a microcontroller (50), which receives the intermediate current signal and is configured for: a) generating a mean value of the intermediate current signal ($I_G$); b) detecting whether the mean value of the intermediate current signal is higher or lower than a threshold; c) if it is higher, reducing the duty cycle of the control signal; if it is lower, increasing the duty cycle of the control signal, so as to decrease or, respectively, increase the value of the electric power absorbed by the secondary electrical load (3).

Fig.1

**EP 2 579 412 A1**

**Description**

The present invention relates to a system and a method for automated management of electric power supply, in particular for aeronautical applications.

The general development of aeronautical technology has led to the design and development of increasingly complex aircraft. This fact has determined widening of the domain of use of electrical energy on board said aircraft.

The utilizers electrically supplied by the electrical wiring system of the aircraft are various, and may comprise some or all, for example, of the following: lighting system, on-board instrumentation, means for starting the engines, heating and air-conditioning system, fuel pumps, radars, means for driving hydraulic systems, pressurization systems, means for control of operation of the engines, generic command and control devices (relays, contactors, servo-valves, etc.), actuators, and others still.

In addition to specifically electrical and electronic utilizers and components, which do not allow alternative power supply, there are other that could be supplied differently. For example, various types of actuators can be actuated electrically or via hydraulic and pneumatic circuits, the heating and air-conditioning system can, alternatively, be connected to the pneumatic system (for producing hot and compressed air), and generic command and control devices (relays, etc.) can be implemented by means of fluidic logic elements.

On board aeroplanes direct-current (DC) electrical energy and alternating-current (AC) electrical energy are typically used. For example, the lighting and heating systems can operate both with DC and with AC, likewise, the engines, can be supplied both with DC and with AC, the command and control devices (relays, warning lights, indicators) generally operate with DC, and the avionics (electronic equipment installed on board the aircraft and having a piloting function) usually operates with AC at 400 Hz, but instruments configured to operate with DC are also provided. Each of these elements of the aircraft absorbs a different percentage of electrical energy for its operation. Typically, the lighting and heating systems use between 50% and 70% of the electrical available energy, the engines between 10% and 40%, the commands and the control devices between 5% and 10%, and the avionics between 5% and 20%.

The adoption of DC power supply is typical of the components that are most important for survival of the aircraft, which can thus operate even in conditions of emergency, with a battery supply.

Some systems of the aircraft operate continuously, from takeoff to landing (for example, the avionics), whereas others are activated upon request (for example, the system for actuation of the undercarriage, or the heating system).

Since different systems require different power supplies with different timings, each aircraft comprises a plurality of generators configured so as to supply the power necessary for the various electrical systems when necessary and facing any possible consumption peaks. Each generator is hence sized appropriately to meet the needs of the system that it supplies.

The presence of a plurality of generators, however, leads to numerous disadvantages above all in terms of high costs and weight.

The aim of the present invention is to provide a system and a method for electric power supply, in particular for automated management of electric power supply for aeronautical applications, that will be able to overcome the drawbacks of the known art.

According to the present invention, a system and a method for electric power supply are provided, as defined in the annexed claims.

For a better understanding of the present invention, preferred embodiments thereof are now described, purely by way of nonlimiting example and with reference to the attached drawings, wherein:

- Figure 1 shows a system for management of the supply of electrical energy to a primary electrical load and to a secondary electrical load, wherein the secondary electrical load is connected to a power-supply line via a power-supply device comprising a controlled switch, according to one embodiment of the present invention;
- Figure 2a shows in greater detail a portion of the management system of Figure 1, in which the controlled switch is a transistor, according to one embodiment of the present invention;
- Figure 2b shows the power-supply device of Figure 1, in which the controlled switch comprises a plurality of transistors connected in parallel to one another, according to a further embodiment of the present invention;
- Figure 3 shows the power-supply device of Figure 1 according to another embodiment of the present invention;
- Figure 4 shows the management system of Figure 1 coupled to a heat dissipator;
- Figure 5 shows, by means of a block diagram and according to one embodiment of the present invention, a system for operating the controlled switch of Figure 2a or Figure 2b;
- Figure 6 shows, by means of a flowchart, steps of a method implemented by the system of Figure 5;
- Figure 7a shows, by way of example, a signal for operating the controlled switch, generated by the system of Figure 5;
- Figures 7b and 7c show, respectively, mean values of voltage and electric current supplied to the secondary electrical load through the controlled switch, when the latter is operated with the signal of Figure 7a;
- Figure 8a shows, by way of example, a further signal for operating the controlled switch, generated by the system of Figure 5;

- Figures 8b and 8c show, respectively, mean values of voltage and electric current supplied to the secondary electrical load through the controlled switch when the latter is operated with the signal of Figure 8a;
- Figure 9a shows, by way of example, a further signal for operating the controlled switch, generated by the system of Figure 5;
- Figures 9b and 9c show, respectively, mean values of voltage and current supplied to the secondary electrical load through the controlled switch when the latter is operated with the signal of Figure 9a;
- Figure 10 shows the management system according to a further embodiment, configured to supply electrical energy to a plurality of primary and secondary electrical loads; and
- Figure 11 shows an aircraft comprising the management system of Figure 11.

According to the present invention, management of the electrical energy that is to be supplied to a plurality of electrical loads of an aircraft occurs in a local and centralized way. There is thus no need to have available a plurality of generators, as many as are the electrical loads to be supplied. In particular, management of the overloads occurs by managing the energy supplied to each load in such a way as to reduce the supply of the energy to loads that are non-operative or non-essential for survival of the aircraft, for supplying appropriately and preferentially the electrical loads fundamental for survival of the aircraft.

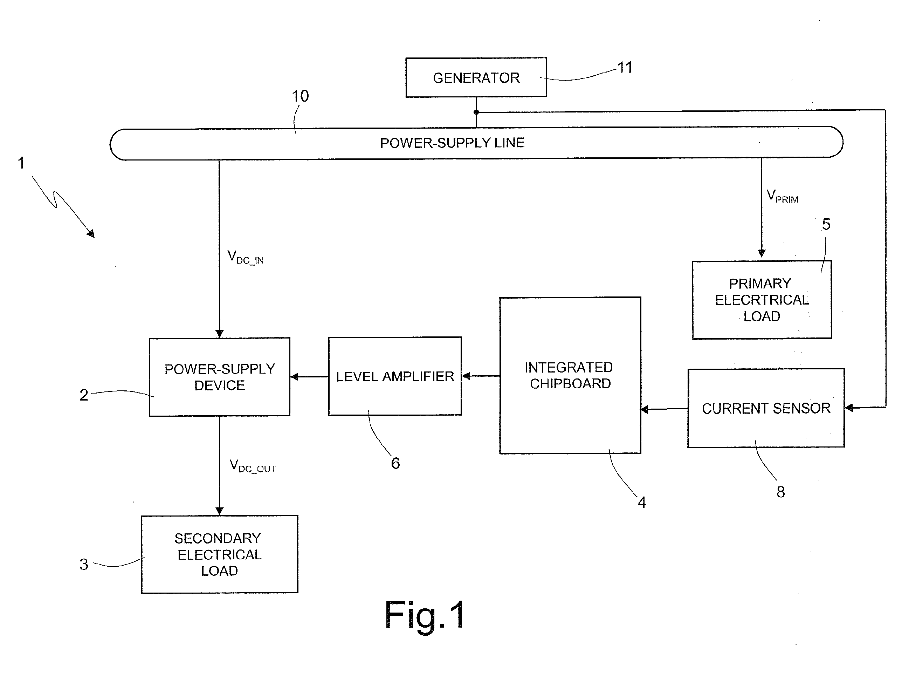

Figure 1 is a schematic illustration of a management system 1 for automated management of the electrical energy (or electric power) to be supplied to a primary electrical load 5 and to a secondary electrical load 3.

The primary electrical load 5 is directly connected to a power-supply line 10, whereas the secondary electrical load 3 is supplied via a power-supply device 2 set to form an interface between the power-supply line 10 and the secondary electrical load 3. The primary electrical load 5 is a load, operation of which is of particular importance for the system in which it operates and which must be supplied with priority with respect to the secondary electrical load 3. For this reason, the primary electrical load 5 is directly supplied by the power-supply line 10, whereas the power supply of the secondary electrical load 3 is entrusted to the power-supply device 2 (operation of which will be described hereinafter). With reference to an aircraft, the primary electrical load 5 comprises, for example, the engines of the aircraft and/or the avionics, whereas the secondary electrical load comprises, for example, the system for lighting the cabin or the heating system.

During use, the primary electrical load 5 absorbs a part of the voltage or power with respect to the total amount available on the power-supply line 10. The voltage or power remaining on the power-supply line 10 is used (either totally or in part) by the secondary electrical load 3.

The management system 1 comprises: the power-supply device 2, configured for regulating the power supplied to the secondary electrical load 3, which receives an input supply signal $V_{DC\_IN}$ in direct current (DC) for example at 270 V, and which supplies at output an output power-supply signal $V_{DC\_OUT}$, which is also in direct current; an integrated chipboard 4, for example comprising a microcontroller, for controlling the operations of the power-supply device 2 so as to manage appropriately the energy supplied by the power-supply device 2 to the secondary electrical load 3; a level amplifier 6, connected between the integrated chipboard 4 and the power-supply device 2, configured for on-state and off-state driving of the power-supply device 2 on the basis of a control signal, for example a PWM (pulse width modulated) signal, generated by the integrated chipboard 4; and a current sensor 8.

The power-supply signal that flows on the power-supply line 10 is generated by a power-supply generator 11, for example a voltage generator. The current sensor 8 is connected between the generator 11 and the power-supply line 10, for detecting the current effectively supplied by the power-supply generator 11 during use.

The integrated chipboard 4 is, for example, based upon an Arduino hardware platform.

The power-supply line 10 is an electrical line that carries a DC power-supply signal (which can be identified on the basis of the voltage $V_{TOT}$, for example 270 VDC, of the current $I_{TOT}$, for example 100 A for voltages of 270 V, and/or of the power $W_{TOT}=V_{TOT} \cdot I_{TOT}$) for supplying generic electrical apparatuses (loads) of the aircraft.

The power-supply line 10 is the typical DC power-supply line present on all aircraft (the so-called "aeroplane DC busbar"). The input signal $V_{DC\_IN}$ of the power-supply device 2 is taken from the power-supply line 10.

The current sensor 8 transduces the current that flows on the power-supply line 10 into a voltage signal (for example, comprised between approximately 0 V and 5 V) proportional to the current that flows on the power-supply line 10. The signal generated at output by the current sensor is a signal indicating the current that flows, at the instant of measurement, on the power-supply line 10 (upstream of any electrical load), and varies linearly as said current varies. According to one embodiment of the present invention, the integrated chipboard 4 operates on digital signals. The voltage signal generated at output by the current sensor 8 is consequently converted into a digital signal by means of an analog-to-digital converter (not shown), for example operating on 8 bits, and assumes a value comprised between 0 and 255. The numeric value (0-255) assumed by the voltage signal generated at output by the current sensor 8 consequently indicates the voltage value (0-5 V) of the signal generated by the current sensor 8, which, in turn, indicates the current value (0-100 A) measured on the power-supply line 10. In the final analysis, hence, the digital value 0 is associated to the current value 0 A, and the digital value 255 is associated to the current value 100 A. It is moreover possible to associate to the digital value 255 a higher current value, for example 150 A or 200 A or higher so as to be able to represent on 8 bits any possible over-supplies of current with respect to the nominal value. The aforementioned current values regard an example according to one embodiment, and in no way limit the scope of the present invention.

The power-supply device 2 comprises a controlled switch 12 (for example, formed by a single MOSFET or by a plurality of MOSFETs connected in parallel to one another), which has a first conduction terminal connected to the power-supply line 10, a second conduction terminal connected to the secondary electrical load 3, and a control terminal configured to receive a control voltage signal that assumes alternatively a first value such as to close the controlled switch 12 (which in this state conducts electric current) and a second value such as to open the controlled switch 12 (which in this state does not conduct electric current). The control signal of the controlled switch 12 is hence a signal having a square waveform, with a certain duty cycle. The duty cycle can be varied during use so as to set appropriately the duration of the intervals in which the controlled switch 12 conducts current with respect to the duration of the intervals in which the controlled switch 12 does not conduct current.

When the controlled switch 12 is closed, the secondary electrical load 3 is coupled to the power-supply line 10 (thus absorbing current), whereas when the controlled switch 12 is open the secondary electrical load 3 is decoupled from the power-supply line 10 (and does not absorb current).

By varying the duty cycle which controls the controlled switch 12, the mean power supplied, in a certain time interval, to the corresponding secondary electrical load 3, is varied consequently. It is thus possible to set, according to the need, the value of power that it is desired to supply to the secondary electrical load 3, in a dynamic way.

The duty cycle of a control signal is given by the ratio between the duration of the control signal at a high level and the total period of the control signal, and expresses for what portion of period the control signal is at a high level (where by "high" is meant the active level of the signal). In the case discussed here, by "high" or "active" level is meant the level that is able to close the controlled switch 12 (i.e., during which the controlled switch 12 conducts electric current), irrespective of the type of controlled switch 12 used.

The signal generated at output by the current sensor 8 is correlated (proportional) to the power-supply signal of the power-supply line 10 ($V_{TOT}$ and/or $I_{TOT}$ and/or $W_{TOT}$). In particular, the signal generated at output by, the current sensor 8 is correlated (proportional) to the current $I_{TOT}$ that flows in the power-supply line 10.

The integrated chipboard 4 receives at input the signal generated at output by the current sensor 8, and carries out the following operations: a) it computes a mean value of the signal generated at output by the current sensor 8, averaged over a certain time interval or over a number of predefined samples of the signal generated at output by the current sensor 8 (in this latter case, the signal generated by the current sensor 8 is first sampled by means of an analog-to-digital converter); b) it detects a deviation of the mean value computed in point a) with respect to a threshold (said threshold is set to the maximum current value that the power-supply line can withstand for operating in safety conditions); and c) in the presence of the deviation referred to in point b), it varies the duty cycle of the control signal of the power-supply device 2 until the mean value of the signal generated by the current sensor 8 assumes a value approximately equal to the threshold value. The variation of the duty cycle, in fact, causes the value of the electric power absorbed by the secondary electrical load 3 (or, from another standpoint, the value of the electric power that the power-supply device 2 supplies to the secondary electrical load 3) to vary.

The deviation referred to in the aforementioned point b) can regard a mean value of the signal generated at output by the current sensor 8 higher than the threshold, or a mean value of the signal generated at output by the current sensor 8 lower than the threshold.

The operation of reduction of the duty cycle of the control signal causes a lower consumption of electrical energy by the secondary electrical load 3 (it increases the time in which the controlled switch 12 is off in proportion to the time in which the controlled switch 12 is on). Consequently, on the power-supply line 10 there is an increase of the energy available that can be used by the primary electrical load 5; the primary electrical load 5 can thus be supplied with the power that it requires, reducing the likelihood of incurring in risks of overvoltages or overcurrents on the power-supply line 10. In the absence of said regulation, a request for oversupply by the primary electrical load 5 would be managed exclusively by the generator 11, which could find itself working in limit conditions, supplying more power than what is envisaged for an operation in safety conditions for itself and for the power-supply line 10.

In limit conditions, the secondary electrical load 3 might not be sufficiently supplied, but operation of the primary electrical load 5 is in all cases guaranteed.

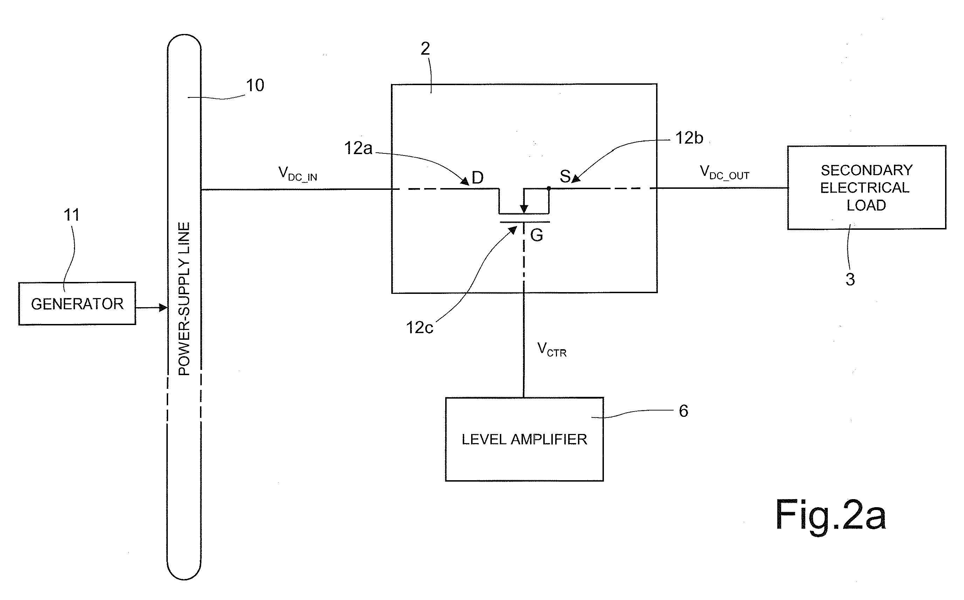

Figure 2a is a schematic illustration of the power-supply device 2 comprising the controlled switch 12 (in particular, a MOSFET of an N type) having a first conduction terminal 12a (in particular, a drain terminal) connected to the power-supply line 10, a second conduction terminal 12b (in particular a source terminal) connected to the secondary electrical load 3, and a control terminal 12c (in particular a gate terminal) connected to the output of the level amplifier 6. In this way, the gate terminal is controlled by the level amplifier 6 with voltages that have a dynamics such as not to damage the MOSFET. It is evident that, by configuring the integrated chipboard 4 for driving the MOSFET in opening/ closing using adequate voltages, such as not to damage the MOSFET, the level amplifier 6 is not necessary.

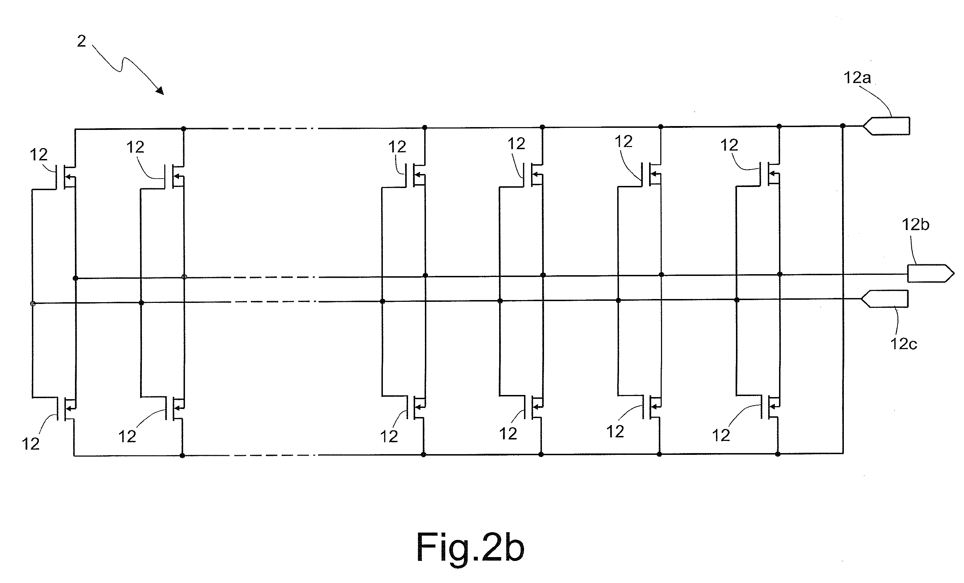

To withstand high current/voltage values, Figure 2b shows a further embodiment of the power-supply device 2, comprising a plurality of transistors 12, in particular N-channel MOSFETs, which have respective first conduction terminals 12a (drain terminals) connected to one another and to the power-supply line 10, respective second conduction terminals 12b (source terminals) connected to one another and to the secondary electrical load 3, and respective control terminals 12c (gate terminals) connected to one another and to the output of the level amplifier 6.

The number and type of MOSFETs is chosen according to the need on the basis of the voltages/currents to be withstood in the specific application of the power-supply device 2. The operations of opening (inhibition) and closing (conduction) occur consequently in a synchronous way for all the MOSFETs of the power-supply device 2 of Figure 2b. The power-supply device 2 of Figure 2b operates, from a conceptual standpoint, as a single MOSFET (having a first conduction terminal and a second conduction terminal and a control terminal). In what follows, reference will consequently be made to a "controlled switch 12" or "power-supply device 2" without limitation to a particular embodiment from among the ones shown in Figures 2a and Figure 2b.

It is moreover evident that the power-supply device 2 may comprise transistors or generic controlled switches of a type different from an N-type MOSFET, for example a P-type MOSFETs, a JFETs, a MESFETs, bipolar transistors, or others still.

In use, as illustrated more clearly in what follows, the controlled switch 12 is controlled alternatively in opening (inhibition), and closing (conduction) by means of the control signal $V_{CTR}$, if necessary conditioned by the level amplifier 6, and applied to the control terminal 12c. The control signal $V_{CTR}$ is, in particular, a voltage signal having a maximum value of some volts (for example, 10 V), configured to drive the controlled switch 12 in opening and closing (the control signal $V_{CTR}$ is, as mentioned previously, a square-wave signal). If the controlled switch 12 is an N-channel MOSFET, when the value of the control signal $V_{CTR}$ exceeds a minimum threshold (i.e., it has a first value), the gate terminal 12c is biased in such a way as to generate a conductive channel between the source terminal 12b and the drain terminal 12a so as to connect the power-supply line 10 to the secondary electrical load 3 and hence supply the secondary electrical load 3; instead, when the value of the control signal $V_{CTR}$ is lower than a minimum threshold (i.e., it has a second value), the controlled switch 12 is inhibited to uncouple the power-supply line 10 from the secondary electrical load 3.

With particular reference to the avionics application, the controlled switch 12, irrespective of the embodiment of the latter, is configured to operate preferably at a maximum working voltage of 285 VDC, and is configured to withstand a maximum working current of approximately 100 A at 270 VDC. Other applications may require different voltage and current values, either higher or lower.

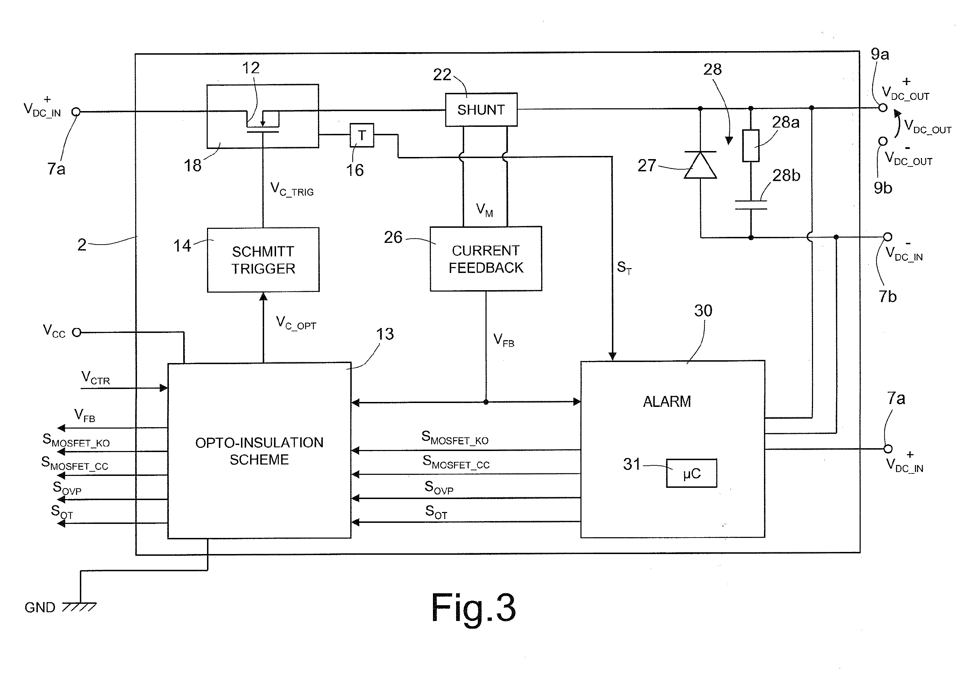

Figure 3 shows, according to one embodiment of the present invention, the power-supply device 2 comprising, in addition to the controlled switch 12, a plurality of further electrical and electronic elements.

The input supply signal $V_{DC\_IN}$ is applied at input to the power-supply device 2 between a first input pin 7a and a second input pin 7b, respectively at the voltage $V^{+}_{DC\_IN}$ and $V^{-}_{DC\_IN}$, where the first input pin 7a is connected to the drain terminal of the MOSFET that forms the controlled switch 12 (as has been said, other types of transistors or controlled switches can be used).

The output power-supply signal $V_{DC\_OUT}$ is supplied at output between a first output pin 9a and a second output pin 9b, respectively at the voltage $V^{+}_{DC\_OUT}$ and $V^{-}_{DC\_OUT}$, where the first output pin 9a is connected to the source terminal of the MOSFET that in this example forms the controlled switch 12.

The power-supply device 2 comprises an opto-insulation board 13, configured to form an interface between the level amplifier 6 and the control terminal 12c of the controlled switch 12. In this way, any possible disturbance (voltage/current peaks) carried by the control signal $V_{CTR}$ do not damage the controlled switch 12. The working principle of the opto-insulation board is known. Typically, an opto-insulation board (or, simply, optoinsulator) comprises a LED, set at an input of the optoinsulator, configured to receive the control signal $V_{CTR}$ (or, alternatively, a current signal that is a function of the control signal $V_{CTR}$) and generate at output a light signal that is a function of the control signal $V_{CTR}$. The light signal thus generated is supplied at input to a photodiode, which generates on one of its outputs an electrical signal $V_{C\_OPT}$ that is a function of the light signal generated by the LED. In the final analysis, hence, the electrical signal $V_{C\_OPT}$ generated by the photodiode is correlated to (or is a function of) the control signal $V_{CTR}$.

The signal at input to the LED may, if necessary, be reduced in intensity using a resistor set upstream of the LED. By introducing a resistor having low resistance (or not introducing the resistor), the LED is biased with a voltage/current having a high value, to obtain a light signal generated by the LED having high intensity. In this case, the variation in intensity of the light signal due to the variations of the voltage/current signal at input to the LED is far from readily perceptible, a fact that is positive from the standpoint of rejection of the disturbance at input. Instead, with a resistor having high resistance, the light signal generated by the LED is more correlated to the variations of voltage/ current of the signal at input to the LED.

As regards, instead, the photodiode, it is typically reversely biased. It is evident that the signal generated at output by the photodiode will replicate more or less faithfully the variations of the control signal $V_{CTR}$, the more the light signal generated by the LED replicates faithfully said variations. For the embodiment considered according to the present invention, it is advisable to use optoinsulators in which spurious variations of the control signal $V_{CTR}$ are not replicated, or are minimally replicated, on the light signal generated by the LED (this is obtained, as has been said, using at input to the LED resistors that have a low value of resistance). In fact, as has been said, the control signal $V_{CTR}$ is a square-wave signal having two states: a high state, or ON state, where the control signal $V_{CTR}$ has a maximum value, and a low state, or OFF state, where the control signal $V_{CTR}$ has a minimum value.

The power-supply device 2 further comprises a Schmitt trigger 14, connected on an output of the opto-insulation board 13, which receives at input the electrical signal $V_{C\_OPT}$ generated as illustrated previously, and is configured to square the electrical signal $V_{C\_OPT}$ to obtain a squared signal $V_{C\_TRIG}$ having steeper rising and falling edges typical of the digital signal. The squared signal $V_{C\_TRIG}$ biases the control terminal 12c of the controlled switch 12, controlling opening thereof (inhibition state) and closing thereof (conduction state).

The squared signal $V_{C\_TRIG}$ is correlated to the electrical signal $V_{C\_OPT}$, and hence correlated to the control signal $V_{CTR}$, and replicates it faithfully. The squared signal $V_{C\_TRIG}$, in particular, has the same duty cycle as the control signal $V_{CTR}$, and is delayed with respect to the control signal $V_{CTR}$ on account of the operations carried out by the opto-insulation board. Said delay consequently depends upon the opto-insulation board used, and it is preferable for it to have a time duration that is as short as possible.

The power-supply device 2 further comprises a thermostat 16, set in the proximity of the controlled switch 12, for monitoring the temperature reached by the latter during use. The thermostat 16 can be set in the proximity (for example, at a distance of a few millimetres) of a package 18 that houses the controlled switch 12, or else in direct contact with the package 18. Alternatively, the thermostat 16 can be set inside the package 18.

The power-supply device 2 further comprises a current shunt 22, also known simply as "shunt", configured to supply a measurement of the current that flows through the controlled switch 12. The current shunt 22 basically comprises a shunt resistor (not shown) configured to shunt through itself a part of the current that flows through the controlled switch 12. As is known, the shunt resistor is connected in parallel to the line on which the current that is to be measured flows (downstream of the controlled switch 12). Operation of a current shunt is well known in the art, and is not further described herein, for brevity.

As an alternative to the current shunt 22, it is possible to use any other device configured to measure the value of current that flows through the controlled switch 12.

The current shunt 22 generates at output a measurement signal $V_M$ (voltage signal) proportional to the current that flows in the controlled switch 12. The power-supply device 2 further comprises a feedback circuit 26, which receives at input the measurement signal $V_M$ generated at output by the current shunt 22 (voltage signal, proportional to the current that flows in the controlled switch 12) and carries out on said measurement signal $V_M$ an operation of conditioning for limiting the dynamics thereof within a predefined interval, for example comprised between approximately 0 and 10 V, generating a feedback signal $V_{FB}$ (voltage signal). The feedback signal $V_{FB}$ is then sent at input to the opto-insulation board 13. Operation of the feedback circuit 26 is useful for adapting the measurement signal $V_M$ to the input dynamics of the opto-insulation board 13.

The power-supply device 2 further comprises a diode 27 connected between the second input pin 7b ($V^-_{DC\_IN}$) and the first output pin 9a ($V^+_{DC\_OUT}$). The diode 27 has the function of preventing damage of the component 12 when the load has an inductive component. The diode 27 is configured for withstanding a maximum voltage between the anode and the cathode of 400 V, a DC forward current, at an operating temperature of 104°C, of a maximum value of 150 A, and a single-pulse forward current, at an operating temperature of 25°C, of a maximum value of 1500 A. The operating temperatures are comprised between -55°C and 175°C. Diodes of this type are known and readily available on the market.

Connected in parallel to the diode 27 is a filter 28, comprising a resistor 28a connected in series to a capacitor 28b (RC network). The filter 28 has the function of reducing current/voltage peaks that may occur during switching of the signal $V_{CTR}$ (which, as has been said, is of the square-wave type, for example of the PWM type). The RC network, in fact, opposes the sharp variations of voltage, absorbing current and consequently causing a considerable reduction in the voltage variations.

The power-supply device 2 further comprises an alarm circuit 30, comprising a microprocessor 31 configured for generating alarm signals in critical situations of operation of the power-supply device 2, and/or in the case of any malfunctioning of the power-supply device 2.

The alarm circuit 30 receives at input a temperature alarm signal $S_T$ generated by the thermostat 16. In particular, the temperature alarm signal $S_T$ is generated by the thermostat 16 when the operating temperature of the controlled switch 12 detected by the thermostat 16 exceeds a certain maximum threshold. Said threshold is, for example, equal to 100°C.

According to a further embodiment, the thermostat 16 generates a plurality of temperature alarm signals, each corresponding to a different threshold with a different criticality. For example, the thermostat 16 generates: a first temperature alarm signal $S_T'$ when the temperature of the controlled switch 12 reaches a low-criticality level, for example equal to 90°C; a second temperature alarm signal $S_T''$ when the temperature of the controlled switch 12 reaches a medium-criticality level, for example, equal to 100°C; and a third temperature alarm signal $S_T'''$ when the temperature of the controlled switch 12 reaches a high-criticality level, for example, equal to 150°C.

According to an alternative embodiment, the thermostat 16 generates at output a temperature alarm signal $S_T$ either continuously or at regular time intervals, where said temperature alarm signal $S_T$ indicates the instantaneous operating temperature of the controlled switch 12. The verification of possible criticalities (comparison with one or more thresholds, in a way similar to what has been described previously) is carried out, in this case, directly by the alarm circuit 30.

The alarm circuit 30 moreover receives the feedback signal $V_{FB}$ generated by the feedback circuit 26. The microprocessor 31 is hence moreover configured for processing the feedback signal $V_{FB}$ in order to detect whether the current that flows in the controlled switch 12 reaches excessively high values (for example, on account of malfunctioning of the logic-state device 12). Said detection is made, for example, by comparing the value of the feedback signal $V_{FB}$ with a predefined threshold.

The alarm circuit 30 moreover supplies to the opto-insulation board 13 a plurality of integrity signals $S_{MOSFET\_KO}$, $S_{MOSFET\_DC}$, $S_{OVP}$, $S_{OT}$ configured to supply information on the integrity and operation of the controlled switch 12.

For its own part, the opto-insulation board 13 receives the integrity signals $S_{MOSFET\_KO}$, $S_{MOSFET\_DC}$, $S_{OVP}$, $S_{OT}$ and supplies them at output from the power-supply device 2 for being processed and managed appropriately (the further management of the alarm signals does not form the subject of the present invention, and hence the corresponding procedures are not described any further). The opto-insulation board 13 hence operates as only input/output interface for the control signals ($V_{CTR}$; $V_{C\_TRIG}$) and management signals (the integrity signals $S_{MOSFET\_KO}$, $S_{MOSFET\_DC}$, $S_{OVP}$, $S_{OT}$) of the power-supply device 2.

The integrity signal $S_{OT}$ is an alarm signal indicating an operating overtemperature of the solid-state device 12. The integrity signal $S_{OT}$ is hence associated to the temperature alarm signal $S_T$ generated by the thermostat 16 and received by the alarm circuit 30 and can assume all the meanings of criticality described previously with reference to the temperature alarm signal $S_T$ for the various embodiments.

The integrity signal $S_{OVP}$ is an alarm signal indicating an overvoltage of the input supply signal $V_{DC\_IN}$. In order to monitor the input voltage, the alarm circuit 30 has an input coupled to the first input pin 7a ($V^+_{DC\_IN}$). The input supply voltage thus received via the first input pin 7a is normalized within a predefined range of values, such as to be managed by the microcontroller 31, and then constantly compared with a predefined threshold, chosen on the basis of the characteristics of the controlled switch 12 (for example, equal to the maximum voltage that the controlled switch 12 is able to withstand). If the voltage of the input supply signal $V_{DC\_IN}$ remains above the predefined threshold beyond a certain time, said critical situation is signalled by means of the integrity signal $S_{OVP}$. The consequences of such a critical situation do not form the subject of the present patent application and hence are not further described herein. By way of example, in any case, in order to overcome said situation the control signal $V_{CTR}$ could be forced to a value such that the solid-state device is driven into an open condition, uncoupling the power-supply line 10 from the secondary electrical load 3.

The integrity signal $S_{MOSFET\_DC}$ is an alarm signal indicating the state of conduction of the controlled switch 12, generated on the basis of the feedback signal $V_{FB}$, and hence proportional to the current that flows through the controlled switch 12. Any possible variations of the current that flows through the controlled switch 12 (measured as described previously) with respect to the expected condition during supply of the secondary electrical load 3 may be indicative a malfunctioning of the controlled switch 12.

The integrity signal $S_{MOSFET\_KO}$ is an alarm signal indicating the state of the line that supplies the secondary electrical load 3, and is generated on the basis of the voltage signals picked up on the first output pin 9a and on the second input pin 7b and processed (after prior appropriate conditioning) by the microcontroller 31. Any possible alterations of said signals with respect to the expected signal are indicative of possible malfunctioning of the power-supply line of the secondary electrical load 3.

Some or all from among the opto-insulation board 13, the Schmitt trigger 14, the current shunt 22, the feedback circuit 26, and the alarm circuit 30 that were, for their operation, to require an external power supply, further comprise a power-supply input of their own, configured to receive a power-supply signal $V_{CC}$ having an appropriate voltage value according to their own supply characteristics (in Figure 3 just the opto-insulation board is shown, by way of example, connected to an external power supply $V_{CC}$).

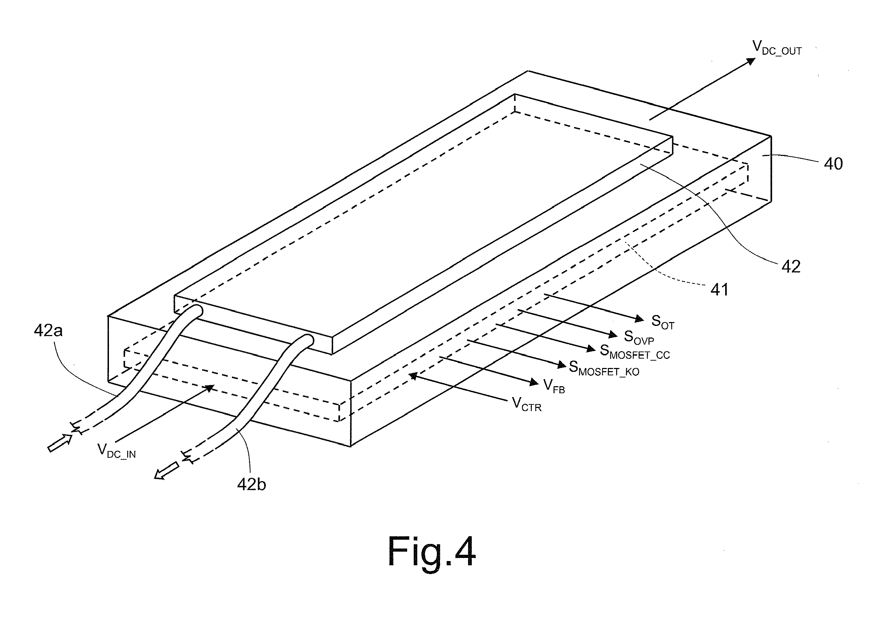

Figure 4 shows, in perspective view, a package 40 within which the power-supply device 2 is housed (the latter being arranged on an integrated chipboard 41).

In order to reduce to a minimum the problems regarding overheating of the power-supply device 2, Figure 4 shows a heat dissipator 42, set in contact with an outer surface of the package 40, for cooling the latter during operation. The ideal operating temperature of the controlled switch 12 is approximately 85°C. The heat dissipator 42 is consequently configured to cool the region inside the package 40 so as to maintain the optimal operating temperature, or in any case a temperature comprised between approximately 70°C and 95°C. Further means for cooling the controlled switch 12 can be envisaged, for example one or more fans (not shown) set inside the package 40, in the proximity of the controlled switch 12.

The heat dissipator 42 is, according to one embodiment of the present invention, of a liquid-cooled type, and comprises an inlet channel 42a through which a cooling liquid enters the heat dissipator 42, and an outlet channel 42b through which the cooling liquid exits from the heat dissipator 42. The cooling liquid is, for example, water having a temperature equal to or lower than 18°C, which flows at a rate of approximately 8 1 per min. Said values have proven sufficient to guarantee the aforementioned levels of performance considering a thermal power to be dissipated P = 300W, a desired temperature inside the package 40 (for example, made of thermally conductive material to favour heat dissipation) of approximately 85°C, and an area of heat exchange between the package 40 and the heat dissipator 42 of approximately 0.0228 m$^2$. The present applicant has verified that, in the aforementioned conditions, the heat dissipator 42 is able to maintain a temperature range in the package 40 of 70°C with powers to be dissipated P=600W. This oversizing of the heat dissipator 42 guarantees good levels of performance even in unforeseen critical conditions.

According to one embodiment, the heat dissipator 42 has inside a cavity, brazed in which are a series of fins, made of corrugated aluminium. The fins create a turbulence of the cooling liquid that minimizes the limit layer and reduces the thermal resistance, thus obtaining a high global heat-exchange coefficient.

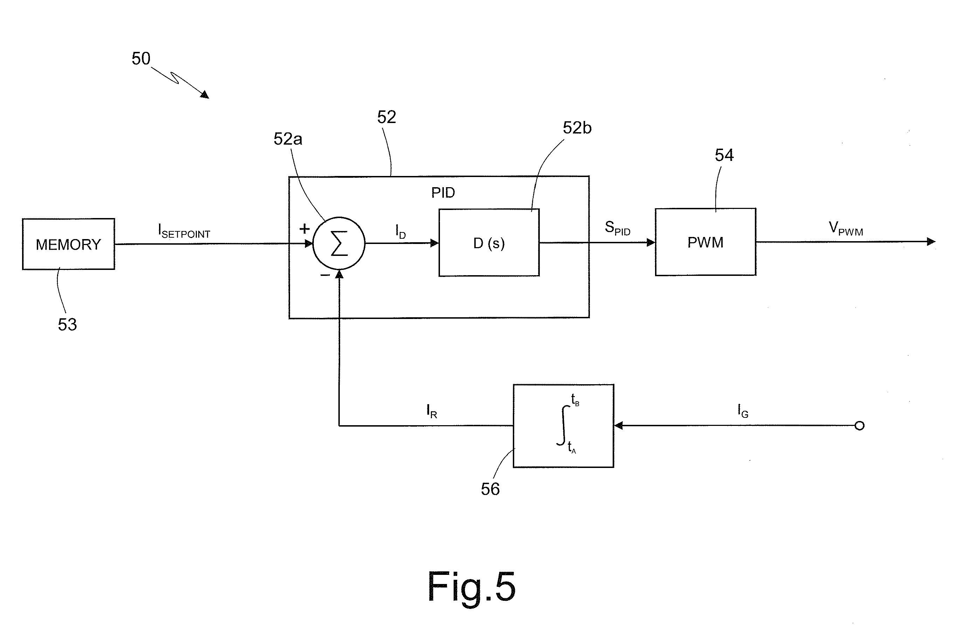

With reference to Figure 5, there now follows a description of a system and a method for driving the power-supply device 2, and in particular for driving the controlled switch 12 (generation of the control signal $V_{CTR}$).

Figure 5 shows a control circuit 50, according to one embodiment of the present invention.

The control circuit 50 comprises a controller 52 of the proportional-integral-derivative (PID) type. The PID controller 52 comprises an adder 52a, configured to receive a reference, or "setpoint", signal $I_{SETPOINT}$, and a signal that is to be compared with the setpoint signal $I_{SETPOINT}$ (feedback signal $I_R$, described more fully hereinafter).

The setpoint signal $I_{SETPOINT}$ identifies the maximum current that can flow on the power-supply line 10 for operating in a safety condition (i.e., without the risk of damaging the power-supply line 10 itself and/or the generator 11). The setpoint signal $I_{SETPOINT}$ can have a predetermined fixed value, stored in a non-rewritable memory 53, or else a value that can be updated according to the need (in this latter case, the memory 53 is of a rewritable type and comprises an access port for writing).

The setpoint signal $I_{SETPOINT}$ is, for example, a numeric value represented on 8 bits, and can assume a value comprised between 0 and 255, where 0 is associated to a current of 0 A, and 255 is associated to the maximum current envisaged (linear association). It is moreover possible to associate to the maximum current envisaged a numeric value lower than 255 to guarantee a certain safety margin.

The adder 52a is configured to generate at output a difference signal $I_D$ given by the difference between the setpoint signal $I_{SETPOINT}$ and the feedback signal $I_R$ ($I_D=I_{SETPOINT}-I_R$). Consequently, operating in the digital domain, the difference $I_{SETPOINT}-I_R$ is made between numeric signals on 8 bits indicating respective current values. In this way, there is ensured consistency between all the values on which the operations are performed.

The feedback signal $I_R$ is obtained as time average of the current signal $I_G$, which is correlated to the current value $I_{TOT}$ present on the power-supply line 10. The current signal $I_G$ is the signal generated at output by the current sensor 8 shown in Figure 1, and indicates the current value measured on the power-supply line 10 by the current sensor 8.

If the current value on the power-supply line 10 (averaged value $I_R$), and the desired value of current on the power-supply line 10 (given by the setpoint value $I_{SETPOINT}$) are known, the PID controller 52 is able to react to a possible positive or negative error of the value of $I_R$ with respect to the desired value $I_{SETPOINT}$ to bring the difference signal $I_D$ to the value 0 (i.e., $I_R=I_{SETPOINT}$).

The PID controller 52 is typically implemented by means of a software program. The signals $I_{SETPOINT}$, $I_R$, $I_G$, $I_D$ shown in Figure 5 are, in this case, digital signals. The setpoint signal $I_{SETPOINT}$ is pre-set at a value equal to the maximum current that can be supplied on the power-supply line 10 by the power-supply generator 11, the signal $I_G$ is a signal that identifies instant by instant the current value $I_{TOT}$ that flows on the power-supply line 10, and the feedback signal $I_R$ is a signal obtained as average of a plurality of values assumed by the signal $I_G$. The adder 52a generates at output an error signal ($I_D$) indicating the difference between the desired signal (setpoint signal $I_{SETPOINT}$) and the signal effectively present on the power-supply line 10. Operation of the adder 52a ($I_D=I_{SETPOINT}-I_R$) is hence carried out on the basis of a current value on the power-supply line 10 that is stable (averaged over a certain time and/or a certain number of samples) and not instantaneous (an instantaneous value is subject to unforeseeable fluctuations). The error signal $I_D$ can have a negative value (on the power-supply line 10 there flows more current than the one envisaged as the maximum possible one for use in safety conditions) or a positive value (on the power-supply line 10 there flows less current than the one envisaged as the maximum possible one for use in safety conditions).

The PID controller 52 further comprises an operating block 52b, having the known transfer function D(s) typical of PID controllers of a known type

$$D(s) = K_p + \frac{K_i}{s} + s \cdot K_d = \frac{\left(K_d \cdot s^2 + K_p \cdot s + K_i\right)}{s}$$

The values of the parameters Kp, $K_i$, and $K_d$ depend upon the load of the PID controller 52, and are set as a function of said load. A known method for setting said parameters is referred to in the literature as the "Ziegler-Nichols rules". Another method known in the literature is, for example, the "Cohen and Coon method".

In particular, the transfer function of the PID controller 52 is chosen in such a way that the time of reaction of the system (time for reaching the setpoint) is shorter than 50 ms, the stabilization time (time for reduction of the error within 5%) is shorter than 2 s, and the maximum overshoot is lower by 5% than the setpoint value.

The Ziegler-Nichols method is known, and basically comprises the following steps: the process is controlled by an exclusively proportional controller ($K_i$, and $K_d$ are set to zero); the gain Kp of the proportional controller is gradually increased; the critical gain $K_u$ is the value of the gain such that the controlled variable presents sustained oscillations, i.e., ones that do not disappear after a transient: this is a measurement of the effect of the delays and of the dynamics of the process; the critical period $P_u$ of the sustained oscillations is recorded; the constants Kp, $K_i$, and $K_d$ are determined as $K_p=0.6 \cdot K_u$, $K_i=P_u/2$, and $K_d=P_u/8$.

For example, for a load of some hundred watts, the optimal values of $K_p$, $K_i$, $K_d$ are respectively 0.5, 1000, and 0.001.

The output from the PID controller 52 is a signal $S_{PID}$ that is used by a PWM modulator 54 for generating a square-wave voltage signal $V_{PWM}$. It is here assumed that the input of the PWM modulator accepts a signal on 8 bits, with values comprised between 0 and 255. Hence, the signal $S_{PID}$ is a digital signal on 8 bits that assumes values comprised between 0 and 255, where $S_{PID}=O$ is interpreted by the PWM modulator 54 as a command for generating a square-wave voltage signal $V_{PWM}$ with duty cycle of 0%, and $S_{PID}=255$ is interpreted by the PWM modulator 54 as a command for generating a square-wave voltage signal $V_{PWM}$ with a duty cycle of 100%. Intermediate values of duty cycle (between 0 and 100%) are driven by respective intermediate values (between 0 and 255) of the signal $S_{PID}$, with linear association (in a way proportional to one another). For example, a duty cycle of 80% is determined by a value $S_{PID}=204$. Internally, the PWM modulator 54 operates in a way in itself known and is hence not described any further herein.

The square-wave voltage signal $V_{PWM}$ is supplied at input to the level amplifier 6; the latter generates, according to the square-wave voltage signal $V_{PWM}$, the control signal $V_{CTR}$ (which follows faithfully the square-wave voltage signal $V_{PWM}$ but has maximum and minimum values such as to drive the controlled switch 12 in opening and closing without damaging it).

According to the embodiment of the power-supply device 2 of Figure 3, the control signal $V_{CTR}$ is supplied at input to the opto-insulation board 13 and not to the controlled switch 12. In this case, the control signal $V_{CTR}$ has maximum and minimum values such as not to damage the opto-insulation board 13. It is evident that the level amplifier 6 might not be necessary in the case where the square-wave voltage signal $V_{PWM}$ has maximum and minimum values such as not to damage the controlled switch 12 or the opto-insulation board 13 (according to the embodiment chosen for the power-supply device 2); in this case, the square-wave voltage signal $V_{PWM}$ coincides with the control signal $V_{CTR}$.

The control circuit 50 further comprises an averaging block 56, configured for receiving the signal $I_D$ and generating the feedback signal $I_R$.

The averaging block 56 may be, for example, an integrator. The feedback signal $I_R$ is generated in this case on the basis of a time average (between the instants $t_A$ and $t_B$) of the current signal $I_G$. A typical value of the interval $t_A$-$t_B$ is in the region of 4 ms.

The operation performed by the integrator is described by the following analytical formula:

$$I_R = \frac{\int_{t_A}^{t_B} I_G(t)dt}{t_B - t_A}$$

Alternatively, the averaging block 56 operates on digital signals $I_D$ and $I_R$, and is designed for computing a mean on a predefined number n_s (for example, n_s=30) of samples of the current signal $I_G$. In this case, the current signal $I_G$ is first sampled (by means of an analog-to-digital converter, not shown), and then the averaging operation is carried out by the averaging block according to the following formula to obtain the feedback signal $I_R$:

$$I_R = \frac{\sum_{j=1}^{n\_s} I_G(j)}{n\_s}$$

Hence, in this case, the feedback signal $I_R$ is a numeric signal that illustrates the mean current value present on the power-supply line during the time interval to which the samples of $I_G$ acquired belong.

In use, in the case where the feedback signal $I_R$ assumes a value higher than the value of the setpoint signal $I_{SETPOINT}$, the control circuit 50 generates a square-wave voltage signal $V_{PWM}$ having a duty cycle such as to reduce the energy consumption of the secondary electrical load 3 (see Figure 1). Namely, the value of the duty cycle of the square-wave voltage signal $V_{PWM}$ is progressively reduced until there are guaranteed, simultaneously, power supply of the electrical load 5 and maintenance, on the power-supply line 10, of a current not higher than the one envisaged, identified, as has been said, by of the setpoint signal $I_{SETPOINT}$. This is obviously at the expense of supply of the secondary electrical load 3, which will see a progressive reduction of the power supplied to it.

If, instead, the value of the feedback signal $I_R$ is below the value of the setpoint signal $I_{SETPOINT}$, the duty cycle of the square-wave voltage signal $V_{PWM}$ is increased, guaranteeing an adequate power supply of the secondary electrical load 3. It is here pointed out that only the secondary electrical load 3 is connected to the power-supply line 10 via the power-supply device 2, the electrical load 5 is directly connected to the power-supply line 10 and consequently is not subject to reductions of supply made by the power-supply device 2.

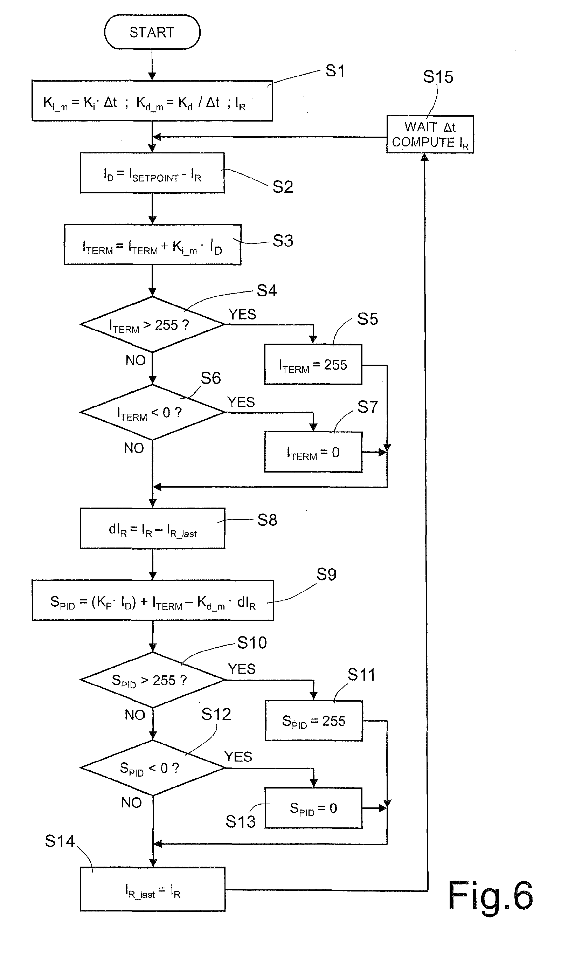

Figure 6 shows, by means of a flowchart, the operations performed by the PID controller 52. From a mathematical standpoint, the PID controller 52 is configured for generating the following output:

$$K_p \cdot e(t) + K_i \cdot \int e(t)dt + K_d \cdot \frac{de(t)}{dt}$$

where e(t) is a time-variable error parameter, given by the deviation of the desired value of current (setpoint value $I_{SETPOINT}$) with respect to the real value of current that flows on the power-supply line 10 (identified by $I_R$, which, as has been said, is a mean value in a certain time interval of the instantaneous real current values). Hence $e(t)=I_D=I_{SETPOINT}-I_R$.

As may be noted from the previous formula, the PID controller 52 supplies an output having: a proportional term, obtained by multiplying the error signal e(t) by the constant Kp; an integral term, proportional to the time integral of the error signal e(t) multiplied by the constant $K_i$; and a derivative term. As has been said, operations of a PID controller are well known in the literature, and are given herein for greater clarity.

In the first place (step S1 of Figure 6), the parameters $K_{i\_m}=K_i \cdot \Delta t$ and $K_{d\_m}= K_d/\Delta t$ are defined, where $\Delta t$ is a pre-set interval, for example 0.1 s. The steps of Figure 6 are not carried out at each instant, but at intervals $\Delta t$. Also the mean value assumed in the interval $\Delta t$ by the current signal $I_G$ is computed to obtain, as already illustrated, the feedback signal $I_R$.

Then (step S2), the error parameter $I_D$ is computed as $I_{SETPOINT}-I_R$.

Next (step S3), the integral term $I_{TERM}$ is computed as $I_{TERM}=I_{TERM}+K_{i\_m} \cdot I_D$. In detail, step S3 carries out the operation of integration according to the following approximation

$$I_{TERM} = K_i \cdot \int e(t)dt \approx \sum K_{in}e_n \Delta t + K_{in-1}e_{n-1}\Delta t + K_{in-2}e_{n-2}\Delta t + \dots =$$
$$\sum K_{i\_m(n)}e_n + K_{i\_m(n-1)}e_{n-1} + K_{i\_m(n-2)}e_{n-2} + \dots$$

Then (step S4), a check is made to verify whether the value of $I_{TERM}$ computed in step S3 exceeds the value 255. If it does (output YES), control passes to step S5, where the value of $I_{TERM}$ is reduced to 255 and then passes to step S8; if it does not (output NO), control passes to step S6. The presence of the step S4 is determined by the fact that it has been assumed that the PWM modulator 54 accepts at input signals on 8 bits. The value 255 can be varied in the case where a PWM modulator 54 is used that is able to accept at input a signal on a greater or smaller number of bits.

In step 56 a check is made to verify whether the value of $I_{TERM}$ computed at step S3 is lower than 0. In it is (output YES), control passes to step S7, where $I_{TERM}$ is set to the value 0; otherwise (output NO), control passes to step S8.

In step S8, the derivative term $K_d \cdot de(t)/dt$ is computed as

$$K_d \cdot \frac{de(t)}{dt} \approx K_d \cdot \left( \frac{dI_{SETPOINT}}{dt} - \frac{dI_R}{dt} \right) = -K_d \frac{dI_R}{dt}$$

It is here pointed out that the time derivative of $I_{SETPOINT}$ is zero, since, as has been said, $I_{SETPOINT}$ is chosen with a value constant in time.

The operation carried out in step S8 is consequently the calculation of $dI_R$ as $dI_R = I_R - I_{R\_last}$, where $I_{R\_last}$ is the last value of $I_R$ calculated. Since, as illustrated hereinafter, the process of Figure 6 is iterative, at the first iteration $I_{R\_last}$ is initialized at the value zero.

Then (step S9), the output of the PID controller 52 is computed as:

$$S_{PID} = (K_p \cdot I_D) + I_{TERM} - K_{d\_m} \cdot dI_R.$$

Next (step S10), a check is made to verify whether the value of $S_{PID}$ is greater than 255; if it is (output YES), control passes to step S11, where the value of $S_{PID}$ is reduced to 255 (as has already been said, so that it can be represented on 8 bits), and control passes to step S14.

In the case of output NO from step S10 (the value of $S_{PID}$ is lower than 255), a check is made (step S12) to verify whether the value of $S_{PID}$ is lower than 0; if it is (output YES), control passes to step S13, where the value of $S_{PID}$ is set to 0, and then to step S14. Output NO from step S12 does not alter the value obtained for $S_{PID}$, and control passes to step S14.

In step S14 the value of the variable $I_{R\_last}$ is updated, for the next iteration, at the current value, i.e., $I_{R\_last} = I_R$.

Control then returns to step S2, and the cycle described is resumed. Between step S14 and step S2 a wait step S15 is envisaged, for waiting for a time $\Delta t$ (for example, as has been said, of 0.1 s). During step S15 the mean value of the current signal $I_G$ in $\Delta t$ is also updated to obtain a new value of the feedback signal $I_R$.

At each iteration, the value obtained for $S_{PID}$ is a number comprised between 0 and 255 in binary digits (i.e., represented on 8 bits), and is supplied at input to the PWM modulator 54. The PWM 54 generates, on the basis of the value of the signal $S_{PID}$, as has been said, a square-wave signal $V_{PWM}$ having duty cycle variable between 0% and 100%. The duty cycle of $V_{PWM}$ varies between 0% and 100% in a linear way with the variation of $S_{PID}$ between 0 and 255.

The operations described with reference to steps S1-S14 are typically carried out by means of a software program configured for said purpose. The operations carried out during steps S1-S14 are made on a number of bits higher than 8 bits, and then converted on 8 bits after step S14, prior to input to the PWM modulator 54.

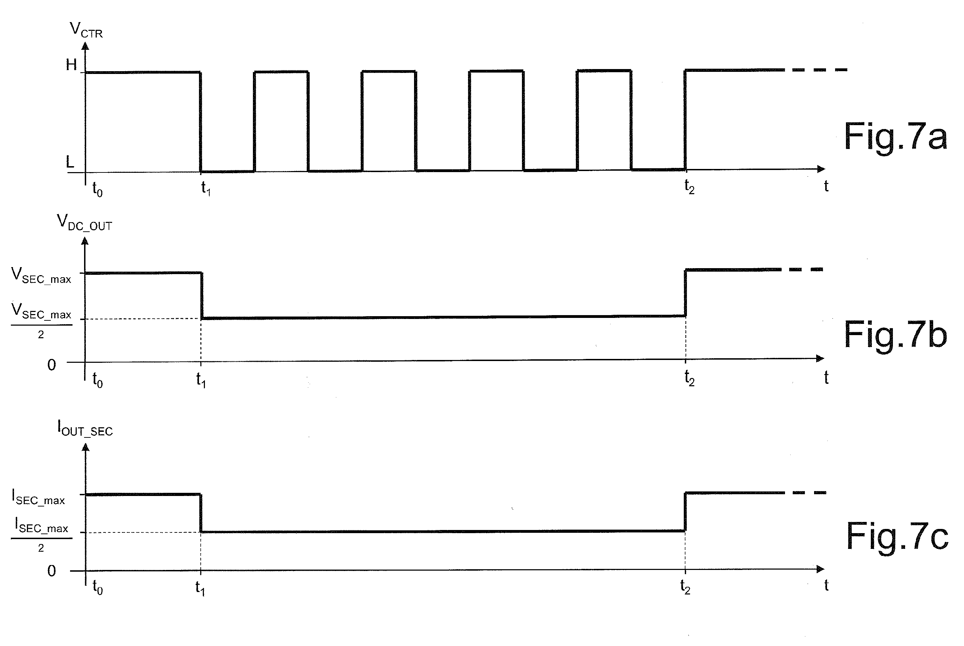

Figure 7a shows variations of the control signal $V_{CTR}$ (the rising and falling edges of which correspond to the respective edges of the square-wave signal $V_{PWM}$) that determines a variation of the supply voltage $V_{DC\_OUT}$ (Figure 7b) and current $I_{SEC}$ (Figure 7c) of the secondary electrical load 3, caused by corresponding variations of the absorption of energy by the primary electrical load 5.

With reference to Figure 7a, between the instant to and the instant $t_1$, it is assumed that the primary electrical load 5 is on at its nominal power $W_{L1}$ and the secondary electrical load 3 is at its nominal power $W_{L2}$. The control signal $V_{CTR}$, in the interval $t_0$-$t_1$, has a high value "H", and the controlled switch 12 is closed (i.e., it conducts electric current). It is assumed, for simplicity of description, that $W_{L1} + W_{L2} = W_{TOT}$ (i.e., all the energy $W_{TOT}$ supplied by the power-supply line 10 is used for supply of the secondary electrical load 3 and of the primary load 5).

With reference to Figures 7b and 7c, the output voltage $V_{DC\_OUT}$ and the respective supply current of the secondary electrical load $I_{SEC}$ have the maximum value required, respectively $V_{SEC-max}$ and $I_{SEC\_max}$.

It is assumed that at the instant $t_1$ the primary electrical load 5 requires a power surplus for its operation (for example, equal to $W_{L2}/2$) going to a level $W_{L1}' = W_{L1} + W_{L2}/2$. The request for supply of the primary electrical load 5 is detected by the control circuit 50 via the current sensor 8 (here it is assumed that the voltage is constant but on the hypothesis of variable-voltage system it is possible to insert also a voltage sensor in the same position and carry out a power control). Consequently, the control circuit 50 issues a command to the power-supply device 2 in such a way as to supply the primary electrical load 5 to guarantee proper operation of the latter, obviously at the expense of operation of the secondary electrical load 3. Consequently, at the instant $t_1$ the control signal $V_{CTR}$ assumes a square waveform with duty cycle of 50%. In this way, a power equal to $W_{L1} + W_{L2}/2$ is used by the primary electrical load 5, and a power equal to $W_{L2}/2$ is used by the secondary electrical load 3. At the instant $t_1$, in fact, the voltage $V_{DC\_OUT}$ and the current $I_{SEC}$ assume a mean value equal, respectively, to $V_{DC\_OUT}/2$ and $I_{SEC}/2$.

It is evident that the passage between a duty cycle of 100% and a duty cycle of 50% of the control signal $V_{CTR}$

does not occur instantaneously as shown by way of example in Figure 7a, but after a period of transient that depends upon the type of PID controller 52 used. Said transient is not shown in Figure 7a for reasons of greater clarity of representation.

From Figures 7a-7c, it may be noted how a possible request of oversupply of the primary electrical load 5 causes an increase of the current that flows on the power-supply line 10, which is detected by the control circuit 50 via the current sensor 8. In order to give priority to the supply of the primary electrical load 5, the control circuit 50 controls the power-supply device 2, via the level amplifier 6, in such a way as to reduce the value of power supplied to the secondary electrical load 3 so as to guarantee a voltage on the power-supply line 10 that is sufficient to supply the primary electrical load 5 without any interruption of service of the latter and, at the same time, maintaining the current value $I_{TOT}$ within the limits of safety.

Figures 7b and 7c show the mean values assumed by the voltage $V_{DC\_OUT}$ and by the current $I_{SEC}$ during the period in which the control signal $V_{CTR}$ has a halved duty cycle.

At the instant $t_2$ it is assumed that the primary electrical load 5 returns to its normal state, using the power $W_{L1}$. In said instant, consequently, the amount of power $W_{L2}/2$ is again completely available for supply of the secondary electrical load 3. Said variation is detected by the control circuit 50 via the current sensor 8, which, consequently, drives again the controlled switch 12 with duty cycle of 100%.

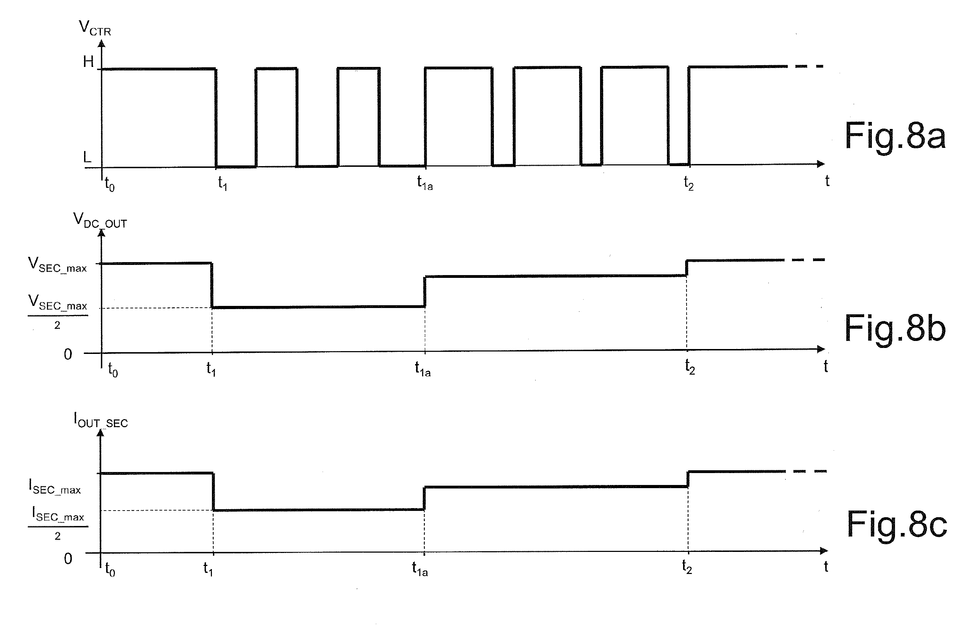

Figures 8a-8c show an operating situation that differs slightly from the one shown in Figures 7a-7c and in which, at an instant $t_{1a}$, comprised between $t_1$ and $t_2$, the primary electrical load 5 requires a power supply lower than the one required at the instant $t_1$. For example, the primary electrical load 5 requires 20% of the total energy available on the power-supply line 10 (i.e., 20% of $W_{TOT}$). The controlled switch 12 is hence controlled by means of the control signal $V_{CTR}$ in such a way as to increase the power supply supplied to the secondary electrical load 3. The duty cycle of the control signal $V_{CTR}$ consequently passes from 50% to 80%. The voltage $V_{DC\_OUT}$ and the current $I_{SEC}$ (shown also in Figures 8b and 8c in their mean values) consequently increase. At instant $t_2$, the primary electrical load 5 absorbs its nominal power $W_{L1}$ and returns to a condition of nominal supply of the secondary electrical load 3 (duty cycle of $V_{CTR}$ of 100%).

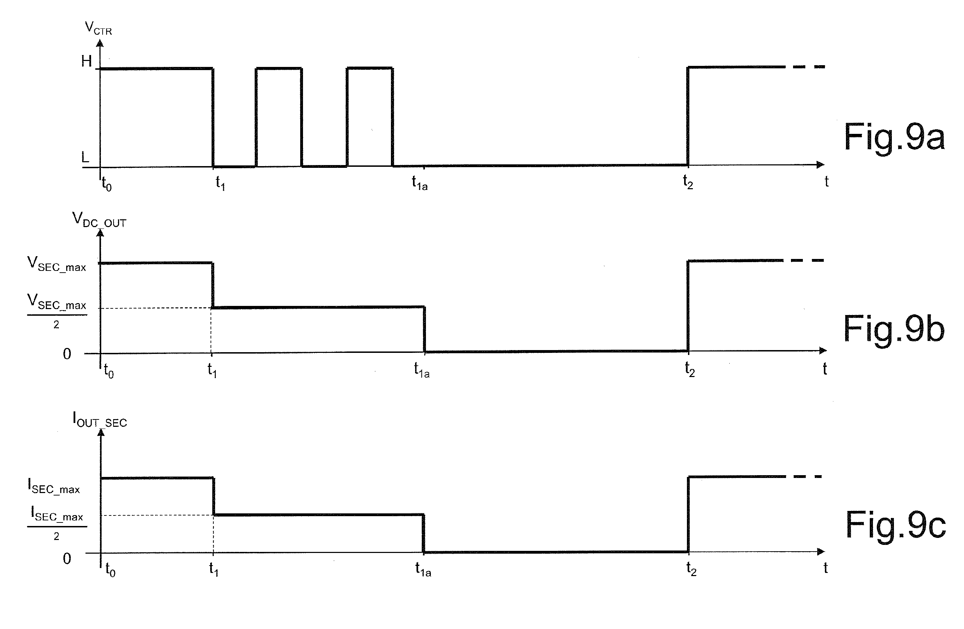

Figures 9a-9c show an operating situation opposite to that of Figures 8a-8c, where at the instant $t_{1a}$ the primary electrical load 5 requests all the total energy available on the power-supply line 10 (i.e., 100% of $V_{TOT}$). The controlled switch 12 is, in this case, kept off (duty cycle of the control signal $V_{CTR}$ equal to 0%). Consequently, the secondary electrical load 3 is not supplied (zero voltage $V_{DC\_OUT}$ and current $I_{SEC}$). At the instant $t_2$, the primary electrical load 5 returns into nominal conditions and the secondary electrical load 3 is again on (the duty cycle of the control signal $V_{CTR}$ assumes a value of 100%). Also in these figures, for greater clarity, there are not shown the periods of transient of the duty cycle of the control signal $V_{CTR}$ at the instants $t_1$, $t_{1a}$ and $t_2$, where the duty cycle of the control signal $V_{CTR}$ increases/decreases gradually, depending upon the PID controller 52 used.

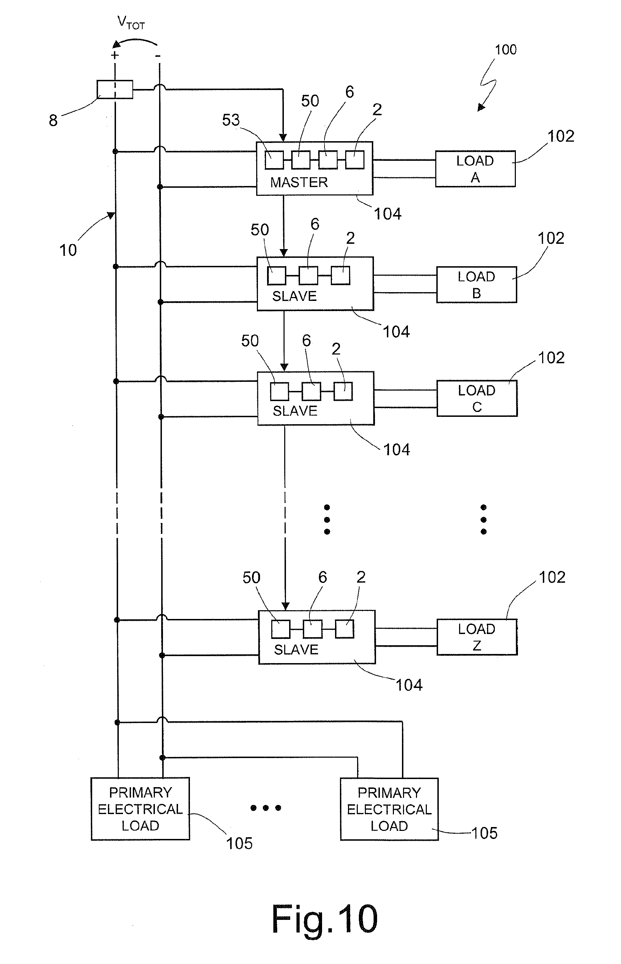

Figure 10 shows a system for automated power management 100 configured to supply a plurality of secondary electrical loads 102. The system for automated power management 100 is similar to the management system 1 (elements that are in common are not described any further), and operates as already described with reference to the management system 1 (see, for example, Figures 1-6 and the corresponding description). The system for automated power management 100 comprises a plurality of power-supply devices 2 of the type described previously, where each of them is connected to a respective secondary electrical load 102, for managing power supply thereof in a way similar to what has been described with reference to Figure 1. Moreover, each power-supply device 2 is connected to a respective integrated chipboard 50 (which manages ON/OFF operation thereof as already described) via a respective level amplifier 6.

The ensemble constituted by the integrated chipboard 50, the level amplifier 6, and the power-supply device 2 connected to one another and to a respective secondary electrical load 102 forms a block 104 for management of the secondary electrical load.

One of the management blocks 104 is referred to as "master", and is directly connected to the current sensor 8 to receive a signal therefrom (e.g., a voltage signal) proportional to the current that flows on the power-supply line 10. The remaining management blocks 104 are referred to as "slaves", and are connected to the master management block 104 to receive through it the setpoint signal $I_{SETPOINT}$.

The master management block 104 further comprises the memory 53 containing the value of the setpoint signal $I_{SETPOINT}$. In the master management block 104 the power-supply priorities of all the secondary electrical loads 102 are moreover set on the basis of the importance of one secondary electrical load 102 with respect to another (the importance is for example determined on the basis of the need or otherwise of operation of said secondary electrical load 102 for survival of the aircraft).

Moreover connected to the power-supply line 10 are one or more primary electrical loads 105. The primary electrical loads 105 are connected to the power-supply line 10 either directly or via an appropriate interface (for example, a DC-DC converter).

Provided herein is an example for illustrating management of supply of the plurality of secondary loads 102.

With reference to Figure 10, each secondary electrical load 102 is identified by a letter A, B, C, ..., Z. The priority of each secondary electrical load is, for example, A=2, B=3, C=1, ..., Z=0 (with 0 minimum priority and 3 maximum priority). When the primary electrical load 105 requests a surplus of power, in the first place the power supplied to the secondary electrical load 102 having the lowest priority is reduced, in this example the load "Z" (priority 0). This command is imparted by the master management block 104 to the respective slave management block 104 connected to the secondary electrical load 102 "Z".

If the reduction of the supply of the secondary electrical load 102 "Z" were not sufficient to guarantee the power supply required by the primary electrical load 105, then the power of the secondary electrical load 102 having immediately higher priority would be decreased, in this case the load "C" (priority 1). If this were not yet sufficient, then the supply of the secondary electrical load 102 having a priority immediately higher than that of the load "C", in this example the load "A", would be decreased, and so on.

The master management block 104 has the function of controlling the slave management blocks 104 in such a way as to carry out reduction of the power absorbed by the secondary electrical loads 102 connected thereto (or total disconnection of the secondary electrical loads 102).

The integrated chipboard 50 is programmed, in the slave management blocks 104, only for generating the PWM signal on the basis of the command received by the master management block 104. It is possible to envisage a dedicated communication protocol between the integrated chipboards 50 (not described herein in so far as they do not form the subject of the present invention).

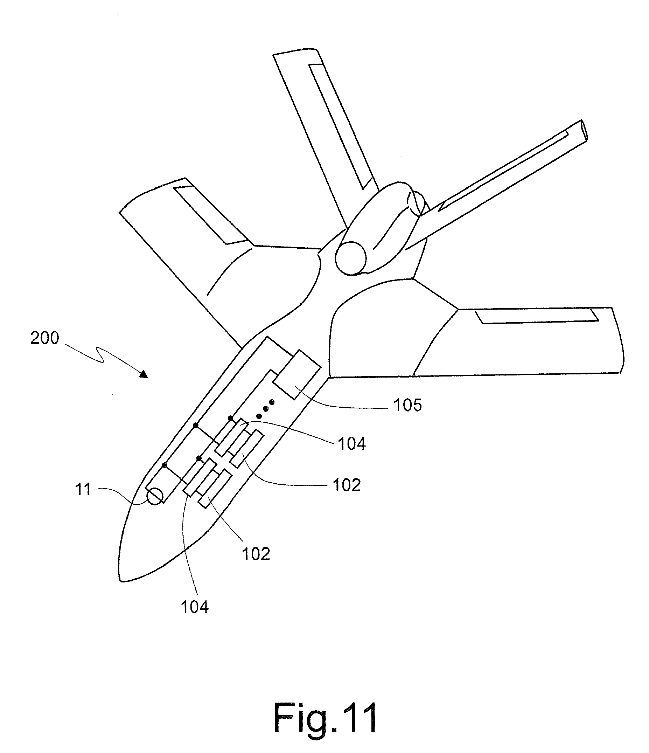

Figure 11 shows an aircraft 200 comprising the system for automated management of the power 1 or 100 (for managing power supply of one or more primary loads and of one or more secondary loads).

From an examination of the characteristics of the invention provided according to the present disclosure the advantages that it affords are evident.

The system for automated management of the power 1 or 100 makes possible a management of the total load at a local level (i.e., for each single load), unlike traditional management that is made at a central level (that is, pre-arrangement of a plurality of dedicated supply generators is required). The present invention enables temporary transfer of power from loads that are not essential to primary loads, which are essential owing to the functions that they perform, in a dynamic way. According to the present invention, it is no longer necessary to size the generators in such a way that they are able to withstand for more or less long periods of time any possible over-supply of current with respect to the nominal value (for example, overloads of 150% for 5 min. or of 200% for 5 s, as aeronautical standards envisage). It is, instead, possible to size the generators on the basis of the nominal load or the mean load of use envisaged, without envisaging particular requirements of overload or oversupply with respect to the nominal capacity. From this there derive a series of advantages, given the same general levels of performance: decrease of the physical dimensions of the generators and hence of the spaces occupied, sizing of the distribution network (cables, contactors, fuses, etc.) on lower currents, consequent reduction of the on-board weights, and hence, given the same general performance, reduction of the costs of the system.

In addition, the system according to the present invention presents the advantage of being programmable in its operation, enabling a considerable flexibility in use. In fact, in the case where the on-board electrical loads are modified entailing an increase or decrease of the nominal power of the load, an eventuality that frequently presents when there are carried out updatings of the aircraft, retrofits, design of a new series, etc., the behaviour of the management system 1 or 100 can be updated via software (basically updating the current setpoint value $I_{SETPOINT}$) not requiring hardware replacement of any component, as would be, instead, necessary in traditional systems of a known type.

Finally, it is clear that modifications and variations may be made to what has been described and illustrated herein, without thereby departing from the sphere of protection of the present invention, as defined in the annexed claims.

For example, the PID controller (52) can be replaced by a controller configured for carrying out just the proportional action. A proportional controller is able to stabilize unstable processes; however, it is not possible to guarantee that the error signal e(t) converges to zero.

Alternatively, it is possible to use a controller configured for carrying out just the proportional and integral actions (proportional-integral, or PI, controller).

A PI controller has a memory of the past values of the error signal e(t); in particular, the value of the integral action is not necessarily zero if the error signal is zero. This property gives to the PI controller the capacity of bringing the process exactly to the required setpoint, where the proportional action alone would be zero. The integral part in time adds up the errors one at a time; this over the long term restores the output variable to the desired values of the setpoint signal. However, this does not prevent an oscillation once the desired value has been reached.

The derivative action compensates the oscillations without waiting for the error to become significant (proportional action) or for it to persist for a certain time (integral action). The derivative action can be omitted in the case where an excessively sensitive controller is not desired. In fact, a PID controller with derivative action could undergo, for example, a sharp variation at the moment when the setpoint were to be changed practically instantaneously from one value to another, resulting in a derivative of e(t) of a very high value (ideally tending to infinity).

As an alternative to the use of the PID controller 52, it is possible to configure the integrated chipboard 4 in such a way as to implement other control and stabilization algorithms of a dynamic system, for example control algorithms based upon the theory of optimal control and robust control, known in the literature.

In addition, even though the present invention has been described with particular reference to the avionic sector, the management system 1 can be used in other sectors of the art, in particular whenever it is necessary to manage electric power supplies of a plurality of electrical loads in a selective way where particular requirements of reduction of encumbrance and weight are to be respected.

**Claims**

1. A system (1) for electric-power supply of a primary electrical load (5) and of a secondary electrical load (3), comprising:

   - a power-supply line (10), configured to carry a main power-supply signal ($W_{TOT}$), said primary electrical load (5) being connected to the power-supply line (10) for absorbing a first electric power and said secondary electrical load (3) being connected to the power-supply line (10) for absorbing a second electric power;
   - a controlled switch (2, 12) having a first conduction terminal (12a) connected to the power-supply line (10), a second conduction terminal (12b) connected to the secondary electrical load (3), and a control terminal (12c) configured to receive a control signal ($V_{CTR}$; $V_{C\_TRIG}$) having alternatively a first control value such as to close the controlled switch to couple the secondary electrical load (3) to the power-supply line (10), and a second control value such as to open the controlled switch to uncouple the secondary electrical load (3) from the power-supply line (10), the control signal ($V_{CTR}$; $V_{C\_TRIG}$) having a duty cycle comprised between 0% and 100%;
   - a current sensor (8), connected to the power-supply line (10), configured for acquiring a main current signal ($I_{TOT}$) associated to the main power-supply signal ($W_{TOT}$) and generating an intermediate quantity ($I_G$) indicative of the main current signal ($I_{TOT}$);
   - a microcontroller (50), connected to the current sensor (8) for receiving said intermediate quantity ($I_G$) and to the control terminal (12c) of the controlled switch (2, 12), configured for supplying to the control terminal (12c) the control signal ($V_{CTR}$; $V_{C\_TRIG}$) and for:

      a) generating a mean value ($I_R$) that the intermediate quantity ($I_G$) assumes in a time interval ($\Delta t$);
      b) detecting a deviation of the mean value ($I_R$) of the intermediate quantity ($I_G$) with respect to a threshold; and
      c) in the presence of said deviation, varying the duty cycle of the control signal ($V_{CTR}$; $V_{C\_TRIG}$), thus varying the value of said second electric power absorbed by the secondary electrical load (3).

2. The system according to Claim 1, wherein detecting a deviation comprises detecting whether the mean value ($I_R$) of the intermediate quantity ($I_G$) is higher than said threshold value, the microcontroller (50) being moreover configured for reducing the duty cycle of the control signal ($V_{CTR}$; $V_{C\_TRIG}$) until said mean value of the intermediate quantity ($I_G$) assumes a value approximately equal to the threshold value.

3. The system according to Claim 1 or Claim 2, wherein detecting a deviation further comprises detecting whether the mean value ($I_R$) of the intermediate quantity ($I_G$) is lower than said threshold value, the microcontroller (50) being moreover configured for increasing the duty cycle of the control signal ($V_{CTR}$; $V_{C\_TRIG}$) until said mean value of the intermediate quantity ($I_G$) assumes a value approximately equal to the threshold value.

4. The system according to any one of the preceding claims, wherein generating a mean value of the intermediate quantity ($I_G$) comprises sampling said intermediate quantity ($I_G$) and carrying out an operation of arithmetic mean on the value of the samples of the intermediate quantity ($I_G$).

5. The system according to any one of Claims 1-3, wherein generating a mean value of the intermediate quantity ($I_G$) comprises carrying out an operation of integration of the intermediate quantity ($I_G$) over a predetermined period ($t_A$-$t_B$).

6. The system according to any one of the preceding claims, wherein said threshold is pre-set to a maximum value of electric current that can be withstood by said power-supply line (10).

7. The system according to any one of the preceding claims, wherein the microcontroller (50) comprises a controller (52) configured for:

   - receiving at input said intermediate quantity ($I_G$) and a reference signal ($I_{SETPOINT}$) defining the value of said threshold;
- carrying out an operation of subtraction between the threshold value and the mean value of the intermediate quantity ($I_G$) to obtain an error signal ($I_D$); and
- varying the duty cycle of the control signal ($V_{CTR}$; $V_{C\_TRIG}$) on the basis of the value of said error signal ($I_D$).

8. The system according to Claim 7, wherein said controller (52) is a proportional-integral-derivative (PID) controller.

9. The system according to any one of the preceding claims, wherein said controlled switch (2, 12) comprises a transistor or a plurality of transistors connected in parallel to one another.

10. The system according to any one of the preceding claims, further comprising a level amplifier (6) connected between the microcontroller (50) and the control terminal (12c) of the controlled switch (2, 12), configured for adapting the value of the control signal ($V_{CTR}$; $V_{C\_TRIG}$) to the values accepted at input by the control terminal (12c) of the controlled switch (2, 12).

11. The system according to any one of the preceding claims, further comprising an opto-insulation board (13) connected between the microcontroller (50) and the control terminal (12c) of the controlled switch (2, 12) and configured to form an electrical-insulation interface between the microcontroller (50) and the controlled switch (2, 12), the opto-insulation board (13) receiving at input an intermediate control signal ($V_{CTR}$) and generating at output an optically insulated electrical signal ($V_{C\_OPT}$) correlated to the intermediate control signal ($V_{CTR}$), said control signal ($V_{C\_TRIG}$) being correlated to the optically insulated electrical signal ($V_{C\_OPT}$).

12. The system according to Claim 11, further comprising a Schmitt trigger (14), connected between the opto-insulation board (13) and the control terminal (12c) of the controlled switch (2, 12) and configured for receiving at input the optically insulated electrical signal ($V_{C\_OPT}$) and generating at output the control signal ($V_{C\_TRIG}$) having rising and falling edges steeper than the respective rising and falling edges of the optically insulated electrical signal ($V_{C\_OPT}$).

13. The system according to any one of the preceding claims, further comprising:

- a thermostat (16), arranged in such a way as to detect a temperature correlated to the operating temperature of the controlled switch (2, 12); and/or
- a current shunt (22), configured to supply a measurement of the current that flows through the controlled switch (2, 12), said system further comprising an alarm circuit (30), connected to the current shunt (22) for receiving said measurement of the current that flows through the controlled switch (2, 12) and/or to the thermostat (16) for receiving said temperature correlated to the operating temperature of the controlled switch (2, 12), the alarm circuit (30) being configured for generating an alarm signal in the case where said measurement of the current that flows through the controlled switch (2, 12) and/or said temperature correlated to the operating temperature of the controlled switch (2, 12) exceed/exceeds a respective predetermined value.

14. The system according to any one of the preceding claims, wherein said controlled switch (2, 12) is housed within a package (40), further comprising a heat dissipator (42) arranged in contact with an outer surface of the package (40) for cooling the package (40) during its operation.

15. An aircraft, comprising an electric-power-supply system (1) according to any one of Claims 1-14.

16. A method of electric power supply of a primary electrical load (5) and of a secondary electrical load (3), comprising:

- supplying a main power-supply signal ($W_{TOT}$) on a power-supply line (10), said primary electrical load (5) being connected to the power-supply line (10) for absorbing a first electric power, and said secondary electrical load (3) being connected to the power-supply line (10) for absorbing a second electric power;
- supplying a control signal ($V_{CTR}$; $V_{C\_TRIG}$) to a control terminal (12c) of a controlled switch (2, 12) having a first conduction terminal (12a) connected to the power-supply line (10), a second conduction terminal (12b) connected to the secondary electrical load (3), the control signal ($V_{CTR}$; $V_{C\_TRIG}$) assuming alternatively a first control value such as to close the controlled switch thus coupling the secondary electrical load (3) to the power-supply line (10), and a second control value such as to open the controlled switch thus uncoupling the secondary electrical load (3) from the power-supply line (10), the control signal ($V_{CTR}$; $V_{C\_TRIG}$) having a duty cycle comprised between 0% and 100%;
- acquiring a main current signal ($I_{TOT}$) associated to the main power-supply signal ($W_{TOT}$) and generating an intermediate quantity ($I_G$) indicating the main current signal ($I_{TOT}$);
- generating a mean value ($I_R$) of the intermediate quantity ($I_G$) in a time interval ($\Delta t$);
- detecting a deviation of the mean value ($I_R$) of the intermediate quantity ($I_G$) with respect to a threshold; and
- in the presence of said deviation, varying the duty cycle of the control signal ($V_{CTR}$; $V_{C\_TRIG}$), thus varying the value of said second electric power absorbed by the secondary electrical load (3).

17. The method according to Claim 16, wherein detecting a deviation comprises detecting exceeding of the threshold by the mean value ($I_R$) of the intermediate quantity ($I_G$), the method further comprising reducing the duty cycle of the control signal ($V_{CTR}$; $V_{C\_TRIG}$) until said mean value of the intermediate quantity ($I_G$) assumes a value approximately equal to the threshold value.

18. The method according to Claim 16 or Claim 17, wherein detecting a deviation further comprises detecting whether the mean value ($I_R$) of the intermediate quantity ($I_G$) is lower than said threshold value, the method further comprising increasing the duty cycle of the control signal ($V_{CTR}$; $V_{C\_TRIG}$) until said mean value of the intermediate quantity ($I_G$) assumes a value approximately equal to the threshold value.

19. The method according to any one of Claims 16-18, wherein the step of varying the duty cycle of the control signal ($V_{CTR}$; $V_{C\_TRIG}$) comprises varying said duty cycle until the mean value ($I_R$) of the intermediate quantity ($I_G$) assumes a value equal to or lower than the threshold.

20. The method according to any one of Claims 16-19, wherein generating a mean value of the intermediate quantity ($I_G$) comprises sampling the intermediate quantity ($I_G$) and carrying out an operation of arithmetic mean on the value of the samples of the intermediate quantity ($I_G$).

21. The method according to any one of Claims 16-19, wherein generating a mean value of the intermediate quantity ($I_G$) comprises carrying out an operation of integration of the intermediate quantity ($I_G$) over a predetermined period ($t_A$-$t_B$).

22. The method according to any one of Claims 16-21, wherein said threshold is pre-set to a maximum value of electric current that can be withstood by said power-supply line (10).

23. The method according to any one of Claims 16-22, further comprising the steps of:

- subtracting the mean value of the intermediate quantity ($I_G$) from the threshold value to obtain an error signal ($I_D$); and
- varying the duty cycle of the control signal ($V_{CTR}$; $V_{C\_TRIG}$) on the basis of the value of said error signal ($I_D$).

24. The method according to Claim 23, wherein the step of varying the duty cycle is carried out by means of a control of a proportional-integral-derivative (PID) type.

EP 2 579 412 A1

GENERATOR 11

10

POWER-SUPPLY LINE

1

$V_{PRIM}$

5

PRIMARY
ELECRTRICAL
LOAD

$V_{DC\_IN}$

POWER-SUPPLY
DEVICE

2

LEVEL AMPLIFIER

6

INTEGRATED
CHIPBOARD

CURRENT SENSOR

8

4

$V_{DC\_OUT}$

SECONDARY
ELECTRICAL
LOAD

3

Fig.1

Fig.2a

Fig.2b

EP 2 579 412 A1

Fig.3

EP 2 579 412 A1

Fig.4

Fig.5

Fig.6

Fig.7a

Fig.7b

Fig.7c

EP 2 579 412 A1

Fig.8a

Fig.8b

Fig.8c

EP 2 579 412 A1

Fig.9a

Fig.9b

Fig.9c

Fig.10

Fig.11

# EUROPEAN SEARCH REPORT

**Application Number**

EP 12 18 7548

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/152942 A1 (WAITE BENJAMIN D [US] ET AL ATKEY WARREN A [US] ET AL) 18 June 2009 (2009-06-18) * abstract; figures 1,2 * * paragraph [0020] - paragraph [0030] * ----- | 1-24 | INV. H02J1/14 H02J4/00 H02M3/156 |
| Y | ANUNCIADA V ET AL: "NEW CONSTANT-FREQUENCY CURRENT-MODE CONTROL FOR POWER CONVERTERS, STABLE FOR ALL VALUES OF DUTY RATIO, AND USABLE IN ALL FOUR QUADRANTS", IEEE TRANSACTIONS ON INDUSTRIAL ELECTRONICS, IEEE SERVICE CENTER, PISCATAWAY, NJ, USA, vol. 37, no. 4, 1 August 1990 (1990-08-01) , pages 323-325, XP000143079, ISSN: 0278-0046, DOI: 10.1109/41.103420 * page 323 - page 324; figures 1-3 * ----- | 1-24 | |
| Y | MINAEI S ET AL: "Simple Realizations of Current-Mode and Voltage-Mode PID, PI and PD Controllers", INDUSTRIAL ELECTRONICS, 2005. ISIE 2005. PROCEEDINGS OF THE IEEE INTER NATIONAL SYMPOSIUM ON DUBROVNIK, CROATIA JUNE 20-23, 2005, PISCATAWAY, NJ, USA,IEEE, vol. 1, 20 June 2005 (2005-06-20), pages 195-198, XP010850073, DOI: 10.1109/ISIE.2005.1528911 ISBN: 978-0-7803-8738-6 * the whole document * ----- -/-- | 8,24 | TECHNICAL FIELDS SEARCHED (IPC) H02J H02M B64G B64D |

The present search report has been drawn up for all claims

| Place of search | Date of completion of the search | Examiner |
|---|---|---|
| Munich | 1 February 2013 | Braccini, Roberto |

EPO FORM 1503 03.82 (P04C01)

Europäisches
Patentamt

European
Patent Office

Office européen
des brevets

# EUROPEAN SEARCH REPORT

**Application Number**

EP 12 18 7548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIU D Y ET AL: "On the use of current sensors for control of power converters", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 1, 17 June 2001 (2001-06-17), pages 302-307, XP010559165, DOI: 10.1109/PESC.2001.954037 ISBN: 978-0-7803-7067-8 * page 302 - page 304 * | 1-24 | |
| A | EP 2 299 578 A2 (LINEAR TECHN INC [US]) 23 March 2011 (2011-03-23) * abstract; figures 1-4 * | 1-24 | |

**TECHNICAL FIELDS SEARCHED (IPC)**

The present search report has been drawn up for all claims

| Place of search | Date of completion of the search | Examiner |
|---|---|---|
| Munich | 1 February 2013 | Braccini, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 18 7548

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2013

| Patent document cited in search report | | | Publication date | Patent family member(s) | | | Publication date |
|---|---|---|---|---|---|---|---|
| US 2009152942 | A1 | | 18-06-2009 | EP | 2220741 | A2 | 25-08-2010 |
| | | | | US | 2009152942 | A1 | 18-06-2009 |
| | | | | US | 2012146405 | A1 | 14-06-2012 |
| | | | | WO | 2009082595 | A2 | 02-07-2009 |
| EP 2299578 | A2 | | 23-03-2011 | EP | 2299578 | A2 | 23-03-2011 |
| | | | | EP | 2317634 | A2 | 04-05-2011 |
| | | | | EP | 2323246 | A2 | 18-05-2011 |
| | | | | US | 2011062932 | A1 | 17-03-2011 |

EPO FORM P0459

For more details about this annex : see Official Journal of the European Patent Office, No. 12/82